# EUROPÄISCHE PATENTSCHRIFT

(11) **EP 3 230 357 B1**
(45) Veröffentlichungstag und Bekanntmachung des Hinweises auf die Patenterteilung: **14.03.2018**
(21) Anmeldenummer: 15816684.3
(22) Anmeldetag: 07.12.2015
(51) Int. Cl.: C08K 3/16, C08K 5/00, C08K 5/22

(54) **POLYMERZUSAMMENSETZUNG MIT VERZÖGERTEM KRISTALLISATIONSVERHALTEN, DAS KRISTALLISATIONSVERHALTEN BEEINFLUSSENDE ADDITIVZUSAMMENSETZUNG, VERFAHREN ZUR HERABSETZUNG DES KRISTALLISATIONSPUNKTES UND/ODER DER KRISTALLISATIONSGESCHWINDIGKEIT SOWIE VERWENDUNG EINER ADDITIVZUSAMMENSETZUNG**
POLYMER COMPOSITION HAVING DELAYED CRYSTALLIZATION BEHAVIOR, ADDITIVE COMPOSITION THAT INFLUENCES THE CRYSTALLIZATION BEHAVIOR, METHOD FOR REDUCING THE CRYSTALLIZATION POINT AND/OR THE CRYSTALLIZATION SPEED, AND USE OF AN ADDITIVE COMPOSITION
COMPOSITION POLYMÈRE À COMPORTEMENT DE CRISTALLISATION RETARDÉ, COMPOSITION D'ADDITIF INFLUANT SUR LE COMPORTEMENT DE CRISTALLISATION, PROCÉDÉ DE RÉDUCTION DU POINT DE CRISTALLISATION ET/OU DE LA VITESSE DE CRISTALLISATION ET UTILISATION D'UNE COMPOSITION ADDITIVE

(30) Priorität: 10.12.2014 DE 102014225488
(43) Veröffentlichungstag der Anmeldung: 18.10.2017
(73) Patentinhaber: Fraunhofer-Gesellschaft zur Förderung der angewandten Forschung e.V., 80686 München (DE)
(72) Erfinder: GROOS, Benjamin, 22111 Hamburg (DE); PFAENDNER, Rudolf, 64668 Rimbach (DE)
(74) Vertreter: Pfenning, Meinig & Partner mbB
(86) Internationale Anmeldenummer: PCT/EP2015/078830
(87) Internationale Veröffentlichungsnummer: WO 2016/091807

(56) Entgegenhaltungen:
- K. SUKATA ET AL.: J. APPL. POL. SCI., Bd. 101, 2006, Seiten 3270-3274, XP002754703, in der Anmeldung erwähnt
- Y.Z. XU ET AL.: J. APPL. POL. SCI., Bd. 77, 2000, Seiten 2685-2690, XP002754704, in der Anmeldung erwähnt

## Beschreibung

Die vorliegende Erfindung betrifft eine Polymerzusammensetzung, die eine Matrix aus mindestens einem kristallisationsfähigen thermoplastischen Polymeren, sowie hierin eingearbeiteten mindestens einen Azinfarbstoff sowie mindestens ein-, zwei-, drei- und/oder vierwertiges Metallsalz beinhaltet oder hieraus besteht. Diese Polymerzusammensetzung zeichnet sich dadurch aus, dass ihr Kristallisationspunkt gegenüber nicht-additivierten Polymerzusammensetzungen bzw. nur mit einem Azinfarbstoff oder einem Metallsalz additivierten Zusammensetzung merklich verringert ist. Zusätzlich betrifft die vorliegende Erfindung eine entsprechende Additivzusammensetzung zur Kristallisation und/oder zur Erniedrigung des Kristallisationspunktes von kristallisationsfähigen thermoplastischen Polymeren oder Polymerzusammensetzungen.

Die Erfindung betrifft außerdem ein Verfahren zur Beeinflussung des Kristallisationsverhaltens von kristallisationsfähigen thermoplastischen Polymeren bzw. Polymerzusammensetzungen, bei dem ein Azinfarbstoff sowie eines der zuvor genannten Metallsalze in ein thermoplastisches kristallisationsfähiges Matrixpolymer bzw. eine Polymerzusammensetzung eingearbeitet wird. Zudem werden Verwendungszwecke der zuvor genannten Additivzusammensetzung, bestehend aus einem Azinfarbstoff und einem Metallsalz angegeben.

Thermoplastische Kunststoffe liegen entweder in amorpher oder (teil-) kristalliner Form vor. In amorphen Kunststoffen sind die Polymerketten ungeordnet. Amorphe Polymere wie z.B. Polystyrol, PVC oder Polycarbonat sind häufig transparent, glänzend, mechanisch spröde und weisen oft eine geringe chemische Beständigkeit auf. Bei der Verarbeitung im Schmelzprozess ist die Fließfähigkeit vergleichsweise eher niedrig, jedoch ist z.B. die Schwindung eines mit diesen amorphen Kunststoffen hergestellten Formteils gering, d.h. von Vorteil. Bei (teil-)kristallinen Kunststoffen sind die Polymerketten in sogenannten Lamellen in geordneter Weise aneinandergelagert. (Teil-)kristalline Polymere wie Polypropylen, Polyester oder Polyamid sind meist opak mit einem zähen, harten mechanischen Verhalten und guter chemischer Beständigkeit. Die Fließfähigkeit bei der Schmelzeverarbeitung ist häufig hoch, aber die Schwindung im Formteil ausgeprägt. Teilkristalline Polymere weisen neben kristallinen Bereichen auch eine amorphe Phase auf. Die Eigenschaften von teilkristallinen Polymeren werden dann u.a. vom Anteil der Kristallite im Verhältnis zu den amorphen Anteilen, dem sogenannten Kristallisationsgrad, der Form der Kristallite (sogenannte Sphärolite), der Größe, der Anzahl und der Verteilung der Kristallite in der amorphen Matrix bestimmt.

Um bestimmte Eigenschaften von Kunststoffen bei der Verarbeitung und in der Anwendung gezielt anzupassen, kann dann u.a. das Kristallisationsverhalten von Kunststoffen durch die Verarbeitungsbedingungen, aber auch mit entsprechenden Additiven beeinflusst werden. Beispielsweise werden häufig sogenannte Nukleierungsmittel (oder Keimbildner) dem Kunststoff zugegeben. Diese Zusätze können dann die Zykluszeiten im Herstellungsprozess verringern, die Transparenz des Kunststoffs erhöhen, die mechanischen Eigenschaften und die Wärmeformbeständigkeit verbessern (siehe z.B. J. Kurja, N. A. Mehl, Nucleating agents for semicrystalline polymers in Plastic Additives Handbook, 6th Edition, H. Zweifel, R.D. Maier, M. Schiller (Herausgeber), München 2009, Seite 967-990). Als Nukleierungsmittel wird eine Vielzahl an chemischen Substanzklassen eingesetzt wie z.B. Sorbitolderivate, Metallphosphate oder Arylamide in Polypropylen, Alkalimetallsalze wie z.B. Natriumbenzoat in Polyethylenterephthalat (PET) und Talk oder Erdalkalisalze von Adipinsäure bei Polyamiden. Physikalische und chemische Vorgänge der Nukleierung von Polymeren sind z.B. in J.P. Mercier, Pol. Eng. Sci. 1990, 30, 270-278 beschrieben.

Andererseits kann es auch für bestimmte Anwendungen oder zum Erreichen bestimmter Eigenschaften erwünscht sein, die Kristallisation von teilkristallinen Polymeren zu verhindern oder zu verzögern. Allerdings gibt es hierzu nur sehr wenige Additive, die dies bewirken können. Bei Polyestern wird beispielsweise die Kristallisation durch Zugabe von SAN (Styrol-Aceylnitril-Copolymer) oder Polystyrol eingeschränkt (R.M.R. Wellen, M.S. Rabello, J. Appl. Pol. Sci. 2009, 114, 1884-1895, R.M.R. Wellen, M.S. Rabello, J. Appl. Pol. Sci. 2010, 116, 1077-1087, R.M.R. Wellen, E.L. Canedo, M.S. Rabello, J. Appl. Pol. Sci. 2012, 125, 2701-2710), bei Polyamiden werden aromatische Verbindungen (US 2005/02344159) u.a. für diesen Zweck vorgeschlagen.

Zur Herstellung von (teil-)kristallinen Polymeren insbesondere Polyamiden mit verzögerter Kristallisation bzw. erniedrigtem Kristallisationspunkt wurden verschiedene Substanzklassen untersucht wie z.B. polycyclische Aromaten (US 2005/02344159), darunter vor allem Farbstoffe wie Nigrosin (K. Sukata et al. J. Appl. Pol. Sci. 2006, 101, 3270-3274) oder diverse Metallsalze (DE 2012105, DE 2229803) wie z.B. Lithiumsalze (Y.Z. Xu et al. J. Appl. Pol. Sci. 2000, 77, 2685-2690). Die bisher beschriebenen Zusätze erfüllen jedoch nicht alle Anforderungen, insbesondre besteht ein Bedarf mit möglichst geringen Zusatzmengen eine signifikante Erniedrigung der Kristallisationstemperatur bzw. Verzögerung der Kristallisation oder der Kristallisationsgeschwindigkeit zu erreichen. Geringe Zusatzmengen sind von Vorteil, da dadurch sonstige Polymereigenschaften geringer beeinflusst werden und weiterhin Kostenvorteile damit verbunden sind.

Aufgabe der vorliegenden Erfindung war es daher, verbesserte Zusätze oder Additive zur Kristallisationsverzögerung bzw. zur Erniedrigung des Kristallisationspunktes von (teil-)kristallinen Polymeren insbesondere von Polyamiden und darauf resultierende Kunststoffzusammensetzungen zur Verfügung zu stellen.

Diese Aufgabe wird hinsichtlich einer Polymerzusammensetzung mit den Merkmalen des Patentanspruchs 1 gelöst. Zudem wird mit Patentanspruch 10 eine Additivzusammensetzung zur Kristallisationsverzögerung und/oder zur Erniedrigung des Kristallisationspunktes von kristallisationsfähigen thermoplastischen Polymeren oder Polymerzusammensetzungen angegeben. Mit Patentanspruch 12 betrifft die vorliegende Erfindung ein Verfahren zur Kristallisationsverzögerung und/oder zur Erniedrigung des Kristallisationspunktes eines kristallisationsfähigen thermoplastischen Polymeren, Verwendungszwecke dieser Additivzusammensetzung werden mit Patentanspruch 14 angegeben. Patentanspruch 15 betrifft schließlich ein Formteil aus der erfindungsgemäßen Zusammensetzung nach Anspruch 1. Die jeweilig abhängigen Patentansprüche stellen dabei vorteilhafte Weiterbildungen dar.

Die Erfindung betrifft somit Polymerzusammensetzungen, enthaltend oder bestehend aus
a) einer Matrix aus mindestens einem kristallisationsfähigem thermoplastischen Polymeren,
b) mindestens einem Azinfarbstoff, sowie
c) mindestens einem ein-, zwei-, drei- und/oder vierwertigem Metallsalz, ausgewählt aus der Gruppe bestehend aus Metallchloriden, Metallbromiden und Metallpseudohalogeniden sowie Mischungen oder Kombinationen hiervon.

Kristallisationsfähige thermoplastische Polymere weisen dabei einen Kristallitschmelzpunkt auf, der beispielsweise durch Differential Scanning Calorimetry (DSC), durch Differential Mechanical Analysis (DMA) oder durch Mikroskopie nachgewiesen werden kann.

Azinfarbstoffe b) sind handelsübliche Produkte und beispielsweise in H. Bernetz, Azine Dyes, Ullmann's Encyclopedia of Industrial Chemistry (DOI 10.1002/14356007.a03_213.pub3) beschrieben. Bevorzugte Azinfarbstoffe sind Induline und Nigrosine, ganz besonders bevorzugt sind Nigrosine. Für die Zwecke der vorliegenden Erfindung hinsichtlich der erfindungsgemäß eingesetzten Azinfarbstoffe wird auf die Definition der zuvor genannten Literaturstelle verwiesen.

Die Metallsalze c) sind im Handel erhältlich. Es kann sich dabei um anorganische oder organische Salze handeln. Bevorzugte ein, zwei, drei oder vierwertige Metallsalze sind insbesondere Alkali und Erdalkalisalze, ganz besonders bevorzugt sind Alkali- und Erdalkalihalogenide und hier insbesondere Chloride oder Bromide wie z.B. Lithiumchlorid, Lithiumbromid, Magnesiumchlorid und Calciumchlorid.

Überraschenderweise konnte festgestellt werden, dass die Kombination eines Azinfarbstoffes und eines ein-, zwei-, drei- oder vierwertigen Metallsalzes zu einer merklichen Erniedrigung des Kristallisationspunktes bzw. zur Kristallisationsverzögerung bei kristallisationsfähigen Polymeren führt. Die Erniedrigung des Kristallisationspunktes wird dabei synergistisch durch die Anwesenheit sowohl des Azinfarbstoffes als auch des zuvor genannten Metallsalzes beeinflusst. Überraschend hierbei war insbesondere, dass die Kombination von ausgewählten Farbstoffen wie z.B. Nigrosin mit Metallsalzen wie z.B. Alkali- und Erdalkalihalogeniden zu einem synergistischen Einfluss auf die Kristallisation von kristallisationsfähigen Thermoplasten, insbesondere Polyamiden führt.

Es werden somit neue Kombinationen zur Erniedrigung der Kristallisationstemperatur von (teil-)kristallinen Polymeren vorgeschlagen, die gegenüber heutigen Produkten in vergleichsweise niedrigen Einsatzkonzentrationen eine hohe Wirkung erzielen. Durch die geringen Einsatzkonzentrationen werden andere Polymereigenschaften nicht oder geringer negativ beeinflusst als im herkömmlichen Fall. Die eingesetzten Zusammensetzungen sind kostengünstig großtechnisch verfügbar.

Gemäß einer bevorzugten Ausführungsform ist der mindestens eine Azinfarbstoff ausgewählt aus der Gruppe bestehend aus Phenazin-Farbstoffen, Oxazin-Farbstoffen, Thiazin-Farbstoffen und/oder Bisazin-Farbstoffen.

Insbesondere sind als Azinfarbstoff Nigrosine und/oder Induline einsetzbar, wobei Nigrosine insbesondere bevorzugt sind.

Das eingangs erwähnte Metallsalz ist bevorzugt ausgewählt aus der Gruppe bestehend aus Alkalimetall-, Erdalkalimetall- sowie Übergangsmetallchloriden, -bomiden und/oder -pseudohlogeniden , bevorzugt Alkalimetallchloriden, - bromiden und/oder-pseudohalogeniden,Erdalkalimetallchloriden, -bromiden und/oder-pseudohalogeniden sowie Übergangsmetallchloriden, -bromiden und/oder -pseudohalogeniden, und ganz besonders Lithiumchlorid, Lithiumbromid, Lithiumbenzoat, Magnesiumchlorid und/oder Calciumchlorid und/oder Zinkchlorid.

Hinsichtlich des Mischungsverhältnisses des Azinfarbstoffes zum Metallsalz sind Gewichtsverhältnisse von 1:99 bis 99:1, bevorzugt von 10:90 bis 90:10, weiter bevorzugt von 80:20 bis 20:80 bevorzugt.

Bevorzugte kristallisationsfähige thermoplastische Polymere der Polymermatrix sind dabei ausgewählt aus der Gruppe bestehend aus
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyolefin-keton-Copolymere
b) Polyacetale, wie z.B. Polyoxymethylen (POM) oder Copolymere mit z.B. Butanal,
c) Polyphenylenoxide und Blends mit Polystyrol oder Polyamiden,
d) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol,
e) Polyimide, Polyamid-imide, Polyetherimide, Polyesterimide, Poly(ether)ketone, Polyarylsulfone, Polyphenylensulfid, Polybenzimidazole, Polyhydantoine,
f) Polyester aus aliphatischen oder aromatischen Dicarbonsäuren oder Diolen oder aus Hydroxy-Carbonsäuren wie z.B. Polyethylenterephthalat (PET), Polybutylenterephthalat (PBT), Polypropylenterephthalat (PPT), Polyethylennaphthylat, Poly-1,4-dimethylolcyclohexanterephthalat, Polyhydroxybenzoat, Polyhydroxynaphthylat, Polymilchsäure (PLA), Polyhydroxybutyrat (PHB), Poly-hydroxyvalerat (PHV),
g) sowie Mischungen, Kombinationen oder Blends aus zwei oder mehr der zuvor genannten Polymere oder auch um Kombinationen oder Blends der (teil-)kristallinen Polymeren mit amorphen Polymeren z.B. auf der Basis von Polystyrolen, halogenhaltigen Polymeren wie PVC, Polyurethanen oder Polycarbonaten.
Sofern es sich bei den o.a. Polymeren um Copolymere handelt, können diese in Form von statistischen ("random"), Block- oder "tapered" Strukturen vorliegen.

Sofern es sich um stereoreguläre Polymere handelt, können diese in Form von isotaktischen, stereotaktischen, aber auch ataktischen Formen oder als Stereoblockcopolymere vorliegen.

Ggf. können die unter a) bis g) genannten (teil-)kristallinen Polymere auch vernetzt vorliegen. Eine Vernetzung kann dabei z.B. durch Zugabe von Radikalbildnern oder durch Strahlung wie Elektronenstrahlen, beta- oder gammaStrahlen während der Verarbeitung oder in einen nachfolgenden Schritt erfolgen.

Die genannten Polymeren a) bis f) können dabei nicht nur als Neuware sondern auch in Form von Rezyklaten vorliegen, z.B. als Produktionsabfälle oder aus Wertstoffsammlungen ("post-consumer" Rezyklate).

Gemäß einer besonders bevorzugten Ausführungsform besteht die Polymermatrix aus einem Polymer, ausgewählt aus der Gruppe bestehend aus Polyamiden und Polyestern, insbesondere Polyamid 6, Polyamid 66, Polyethylenterephthalat, Polybutylenterephthalat und Polymilchsäure. Hierbei sind insbesondere Polyamide bevorzugt, ganz besonders bevorzugt Polyamid 6 bzw. Polyamid 66, sowie Blends von Polyamid-6 und Polyamid-6.6.

Zudem ist bevorzugt, dass die Polymerzusammensetzung
a) 99,98 bis 80,00 Gew.-Teilen, bevorzugt 99,96 bis 94 Gew.-Teilen einer Matrix aus mindestens einem kristallisationsfähigem thermoplastischen Polymeren,
b) 0,01 bis 10 Gew.-Teilen, bevorzugt 0,02 bis 3 Gew.-Teilen mindestens eines Azinfarbstoffs, sowie
c) 0,01 bis 10 Gew.-Teilen, bevorzugt 0,02 bis 3 Gew.-Teilen mindestens eines ein-, zwei-, drei- und/oder vierwertigen Metallsalzes,
wobei sich die Gewichtsteile der Bestandteile a) bis c) zu 100 Gew.-Teilen addieren, enthält oder hieraus besteht.

Insbesondere enthält oder besteht die Polymerzusammensetzung
a) 99,98 bis 80,00 Gew.-Teilen, bevorzugt 99,96 bis 94 Gew.-Teilen einer Matrix aus mindestens einem Polyamid oder Polyester,
b) 0,01 bis 10 Gew.-Teilen, bevorzugt 0,02 bis 3 Gew.-Teilen mindestens eines Nigrosins, sowie
c) 0,01 bis 10 Gew.-Teilen, bevorzugt 0,02 bis 3 Gew.-Teilen mindestens eines Alkali- oder Erdalkalihalogenid oder-pseudohalogenid,
wobei sich die Gewichtsteile der Bestandteile a) bis c) zu 100 Gew.-Teilen addieren.

Zusätzlich kann die Zusammensetzung weitere Zusatzstoffe beinhalten, insbesondere ausgewählt aus der Gruppe bestehend aus UV-Absorber, der Lichtstabilisatoren, der Stabilisatoren, der Hydroxylamine, der Benzofuranone, der Metalldesaktivatoren, der Füllstoffdesaktivatoren, der Flammschutzmittel, der Nukleierungsmittel, Schlagzähigkeitsverbesserer, Weichmacher, Gleitmittel, Rheologiemodifikatoren, Kettenverlängerer, Verarbeitungshilfsmittel, Pigmente, Farbstoffe, Füllstoffe, Verstärkungsstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel, Antifoggingmittel sowie Mischung und Kombinationen aus mindestens zwei der zuvor genannten Zusatzstoffen.

Für den Fall, dass die zuvor genannten Zusatzstoffe in der Polymerzusammensetzung enthalten sind, verringert sich der Gehalt der Polymermatrix um den Betrag, den der mindestens eine Zusatzstoff in diesem Fall an der Zusammensetzung ausmacht. Für jeden Zusatzstoff kann dabei ein eigner definierter Gehalt angesetzt werden. Beispielsweise werden Säurefänger häufig in einer Konzentration von 0.05-0,5 %, phenolische Antioxidantien in 0.02-0.5 %, Phosphite in 0,02-0.3 %, Lichstabilisatoren in 0.05-1 %, Dispergiermittel in 0.1-1 % und Kettenverlängerer in 0.05-0.5 % eingesetzt. Vorzugsweise werden insbesondere bei Polyamiden als Matrixpolymeren Kupfer-(I)-iodid als Stabilisator eingesetzt, ggf. auch in Kombination mit Kaliumidodid. Beispielsweise können dabei die Stabilisatoren in einer Menge von bis zu 50 ppm in der Zusammensetzung enthalten sein.

In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel und/oder Flammschutzmittel und/oder Füllstoffe/Verstärkungsstoffe und/oder Kettenverlängerer.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete phenolische Antioxidantien sind beispielsweise: Octadecyl-3-(3,5-di-*tert*-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)penta-erythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Weitere geeignete Stabilisatoren sind aminische Antioxidantien, wie z.B. N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)-propan, (o-Tolyl)biguanid, Bis[4-(1',3'-dimethylbutyl)phenyl]amin, *tert*octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

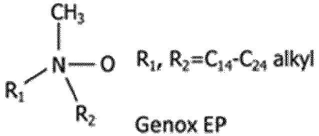

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel: 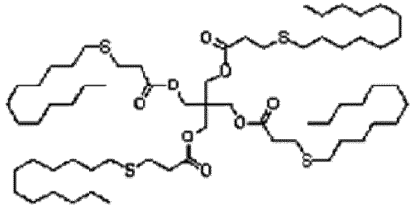 Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin_Kupfer-(I)-Komplexe.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Flammschutzmittel sind beispielsweise:
a) anorganischen Flammschutzmittel wie z.B. Al(OH)₃, Mg(OH)₂, AlO(OH), MgCO₃, Schichtsilikate wie z.B. Montmorillonit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminumphosphat, Melaminzinkphosphat, Melaminmagnesiumphopsphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z.B. Alkoxyamine, Hydroxylaminester, Azoverbindungen, Dicumyl oder Polycumyl, Hydroxyimide und deren Derivate wie z.B. Hydroxyimidester oder Hydroxyimidether
d) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltige Flammschutzmittel auf Chlor- und Brombasis wie z.B. polybrominierte Diphenyloxide, wie z.B. Decabromdi-phenyloxid,Tris(3-bromo-2,2-bis(bromomethyl)propyl-phosphat, Tris(tribromneopentyl)phosphat, Tetrabromphthalsäure, 1,2-Bis-(tribromphenoxy)ethan, Hexabromcyclododecan, bromiertes Diphenylethan, Tris-(2,3-dibrompropyl)isocyanurat, Ethylen-bis-(tetrabromophthalimid), Tetrabromo-bisphenol A, bromiertes Polystyrol, bromiertes Polybutadien bzw, Polystyrol-bromiertes Polybutadien-Copolymere, bromiertes Epoxidharz, Polypentabrombenzylacrylat, ggf. in Kombination mit Sb₂O₃ und/oder Sb₂O₅,
f) Borate wie z.B. Zinkborat oder Calciumborat,
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) siliciumhaltige Verbindungen wie z.B. Polyphenylsiloxane.
sowie Kombinationen oder Mischungen hieraus.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit, Sepiolit.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, (Poly)carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Die erfindungsgemäßen Polymerzusammensetzungen eignen sich insbesondere zur Weiterverarbeitung zu speziellen Formteilen, wie z.B. Spritzgussteilen, Folien oder Filmen, Schäumen, Fasern, Kabeln und Rohren, Profilen, Hohlkörpern, Bändchen, Membranen, wie z.B. Geomembranen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Diese Formteile zählen ebenso zur vorliegenden Erfindung.

Eine weitere bevorzugte Anwendung der erfindungsgemäßen Zusammensetzungen sind Polymerwerkstoffe, die für die generative Fertigung ("Additives Manufacturing", "Rapid Prototyping", "Rapid Manufacturing") eingesetzt werden. Hierbei wird beispielsweise ein Polymerpulver in einem Schichtaufbauverfahren oder in einem Druckverfahren mittels thermischer oder (photo-) chemischer Prozesse in eine dreiteilige Form gebracht. Beispiele für generative Fertigungsverfahren sind selektives Lasersintern (SLS), selektives Laserschmelzen (SLM), Fused Deposition Modeling (FDM) oder 3D Druck. Besonders geeignet sind die erfindungsgemäßen Zusammensetzungen für thermische Schichtaufbauverfahren wie das selektive Lasersintern.
Eine weitere bevorzugte Anwendung der erfindungsgemäßen Zusammensetzungen sind Polymerwerkstoffe, die sich zum Kunststoffschweißen eignen.

Die vorliegende Erfindung betrifft zudem eine Additivzusammensetzung zur Kristallisationsverzögerung und/oder Verringerung der Kristallisationsgeschwindigkeit und/oder zur Erniedrigung des Kristallisationspunktes von kristallisationsfähigen thermoplastischen Polymeren oder Polymerzusammensetzungen, bestehend aus oder enthaltend
a) mindestens einem Azinfarbstoff, sowie
b) mindestens einem ein-, zwei-, drei- und/oder vierwertigem Metallsalz, ausgewählt aus der Gruppe bestehend aus Metallchloriden, Metallbromiden und Metallpseudohalogeniden sowie Mischungen oder Kombinationen hiervon.

Überraschenderweise konnte festgestellt werden, dass diese Additivzusammensetzung in der Lage ist, das Kristallisationsverhalten von kristallisationsfähigen thermoplastischen Polymeren oder Polymerzusammensetzungen dahingehend beeinflussen, dass die Zugabe einer erfindungsgemäßen Additivzusammensetzung zur Kristallisationsverzögerung und/oder zur Erniedrigung des Kristallisationspunktes des thermoplastischen Polymeren führt. Weiterhin können durch diesen Zusatz bzw. das dadurch ausgelöste Kristallisationsverhalten weitere Eigenschaften des Kunststoffs beeinflusst werden, wie z.B. die Oberflächenbeschaffenheit, Oberflächengüte, Glanz, mechanische Eigenschaften, elektrische Eigenschaften, rheologische Eigenschaften, Alterung, thermische Stabilität.

Bevorzugt ist der mindestens eine Azinfarbstoff ausgewählt aus der Gruppe bestehend aus Phenazin-Farbstoffen, Oxazin-Farbstoffen, Thiazin-Farbstoffen und/oder Bisazin-Farbstoffen, insbesondere ausgewählt aus der Gruppe bestehend aus Nigrosinen und/oder Indulinen.

Vorzugsweise ist das mindestens eine ein-, zwei-, drei- und/oder vierwertige Metallsalz bevorzugt ausgewählt aus der Gruppe bestehend aus Alkalimetall-, Erdalkalimetall- sowie Übergangsmetallchloriden, -bomiden und/oder - pseudohlaogeniden, bevorzugt Alkalimetallchloriden, -bromiden und/oder-pseudohalogeniden,Erdalkalimetallchloriden, -bromiden und/oder-pseudohalogeniden sowie Übergangsmetallchloriden, -bromiden und/oder-pseudohalogeniden, und ganz besonders Lithiumchlorid, Lithiumbromid, Lithiumbenzoat, Magnesiumchlorid und/oder Calciumchlorid und/oder Zinkchlorid.

Das Gewichtsverhältnis des mindestens einen Azinfarbstoffes zum mindestens einen ein-, zwei-, drei- und/oder vierwertigem Metallsalz beträgt von 1:99 bis 99:1, bevorzugt von 10:90 bis 90:10, weiter bevorzugt von 80:20 bis 20:80 .

Die vorliegende Erfindung betrifft ebenso Verfahren zur Kristallisationsverzögerung, zur Erniedrigung der Kristallisationsgeschwindigkeit, zur Erniedrigung des Kristallisationspunktes eines kristallisationsfähigen thermoplastischen Polymeren, bei dem eine zuvor beschriebene erfindungsgemäße Additivzusammensetzung in eine Polymermatrix, enthaltend oder bestehend aus mindestens einem kristallisationsfähigem thermoplastischen Polymeren zugegeben wird, die Polymermatrix in die Schmelze überführt und anschließend abgekühlt wird. Alternativ hierzu ist es ebenso möglich, die zuvor genannte Additivzusammensetzung in eine in schmelzflüssigem Zustand befindliche Polymermatrix, enthaltend oder bestehend aus mindestens einem kristallisationsfähigem thermoplastischen Polymeren eingearbeitet und anschließend abgekühlt wird.

Somit betrifft die Erfindung ebenso die Verwendung der erfindungsgemäßen Additivzusammensetzung zu den genannten Zwecken.

Für den Fall, dass der Polymerzusammensetzung weitere Bestandteile zugefügt werden , können diese separat, in Form von Flüssigkeiten, Pulvern, Granulaten oder kompaktierten Produkten oder zusammen mit der erfindungsgemäßen Additivzusammensetzung wie zuvor beschrieben den Polymeren zugesetzt werden.

Die Einarbeitung der oben beschriebenen Additivzusammensetzung und ggf. der zusätzlichen Additive in den Kunststoff erfolgt durch übliche Verarbeitungsmethoden, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen erfolgen.

Weiterhin können die erfindungsgemäßen Additivzusammensetzungen in Form von Masterbatchen oder Konzentraten, die beispielsweise 10-90 % der erfindungsgemäßen Zusammensetzungen in einem Polymeren enthalten, hergestellt und eingebracht werden.

Zudem betrifft die vorliegende Erfindung die Verwendung einer erfindungsgemäßen Additivzusammensetzung zur Kristallisationsverzögerung und/oder Verringerung der Kristallisationsgeschwindigkeit und/oder zur Erniedrigung des Kristallisationspunktes von kristallisationsfähigen thermoplastischen Polymeren.

Die vorliegende Erfindung wird anhand der nachfolgenden Ausführungsformen näher beschrieben, ohne die Erfindung jedoch auf die dargestellten bevorzugten Parameter zu beschränken.

### Beispiel 1-11:

Ein Polyamid 6 (Alphalon 27, Grupa Azoty ATT Polymers GmbH) wurde mit verschiedenen Nigrosinen und/oder Metallsalzen in der Schmelze gemischt. Die Zusammensetzungen sind in Tabelle 1 beschrieben. Die Verarbeitung in der Schmelze wurde mit einem gleichläufigen Doppelschneckenextruder (Thermo Scientific Process 11) durchgeführt. Die Schneckendrehzahl betrug 450 1/min, bei einem Durchsatz von 800 g/h und einer Schmelzetemperatur von 260°C. Die heiße Schmelze wurde dann in einem Wasserbad gekühlt und anschließend stranggranuliert.

Die thermische Analyse der Compounds wurde mittels dynamischer Differenzkalorimetrie (DSC) durchgeführt. Zur Untersuchung des Schmelz- und Kristallisationsverhaltens wurde eine DSC 822e (Mettler-Toledo AG) mit einem konstanten Stickstoffdurchfluss von 20 ml 1/min und einer Stickstoffkühlung verwendet. Die Temperatur und der Wärmestrom wurden mit Indium und Zink kalibriert. Die Probemenge betrug immer 5 mg mit einer Abweichung von ±0,1 mg. Verwendet wurde ein Aluminium-Tiegel. Die Proben wurden mit 10°C min-1 von 0°C auf 270°C erhitzt und dort für 3 min gehalten. Danach wurde die Probe mit 10°C min-1 wieder auf 0°C abgekühlt. Dieser Zyklus wurde zweimal wiederholt. Die Analyse der Kennwerte Schmelztemperatur Ts, Peakkristallisationstemperatur T_{PC} und Kristallisationsenthalpie ΔHc (J/g) wurde anhand des zweiten Heiz- und Kühlzyklus vorgenommen. Der erfindungsrelevante Kennwert T_{PC} ist in Tabelle 1 für alle Beispiele dargestellt.

**Tabelle 1: Zusammensetzungen und Kristallisationstemperaturen von erfindungsgemäßen Zusammensetzungen und Vergleichsbeispielen**

| **Beispiel** | **Additive** | **W [%]** | **T_{PC} [°C]** |
|---|---|---|---|
| **Vergleichsbeispiel 1** | - | 0 | 186,9 |
| **Vergleichsbeispiel 2** | Nigrosin A | 0,5 | 181,2 |
| **Vergleichsbeispiel 3** | Nigrosin A | 1,5 | 178,3 |
| **Vergleichsbeispiel 4** | Nigrosin A | 3,0 | 180,4 |
| **Vergleichsbeispiel 5** | Nigrosin B | 0,5 | 176,9 |
| **Vergleichsbeispiel 6** | Nigrosin B | 3,0 | 176,3 |
| **Vergleichsbeispiel 7** | Lithiumchlorid | 0,5 | 180,7 |
| **Vergleichsbeispiel 8** | Lithiumchlorid | 1,5 | 168,8 |
| **Vergleichsbeispiel 9** | Lithiumchlorid | 3,0 | 152,5 |
| **Vergleichsbeispiel 10** | Lithiumbenzoat | 0,5 | 184,9 |
| **Vergleichsbeispiel 11** | Lithiumbenzoat | 3,0 | 178,6 |
| **Erfindungsgemäßes Beispiel 1** | Nigrosin A/Lithiumchlorid 1:2 | 0,5 | 175,6 |
| **Erfindungsgemäßes Beispiel 2** | Nigrosin A/Lithiumchlorid 1:2 | 3,0 | 143,0 |
| **Erfindungsgemäßes Beispiel 3** | Nigrosin A/Lithiumchlorid 1:1 | 0,5 | 172,6 |
| **Erfindungsgemäßes Beispiel 4** | Nigrosin A/Lithiumchlorid 1:1 | 1,5 | 163,4 |
| **Erfindungsgemäßes Beispiel 5** | Nigrosin A/Lithiumchlorid 1:1 | 3,0 | 145,3 |
| **Erfindungsgemäßes Beispiel 6** | Nigrosin A/Lithiumchlorid 2:1 | 0,5 | 179,0 |
| **Erfindungsgemäßes Beispiel 7** | Nigrosin A/Lithiumchlorid 2:1 | 3,0 | 151,0 |
| **Erfindungsgemäßes Beispiel 8** | Nigrosin B/Lithiumchlorid 1:1 | 0,5 | 157,2 |
| **Erfindungsgemäßes Beispiel 9** | Nigrosin B/Lithiumchlorid 1:1 | 3,0 | 149,8 |
| **Erfindungsgemäßes Beispiel 10** | Nigrosin A/Lithiumbenzoat 1:1 | 0,5 | 174,8 |
| **Erfindungsgemäßes Beispiel 11** | Nigrosin A/Lithiumbenzoat 1:1 | 3,0 | 169,7 |

| | | | |
|---|---|---|---|
| T_{PC}: Kristallisationstemperatur; w: Massenanteil des(der) Additiv(e) Nigrosin A: NIGROSINBASE BA01 (LANXESS Deutschland GmbH) Nigrosin B: NUBIAN® BLACK TN-870 (ORIENT CHEMICAL INDUSTIRES CO., LTD.) Lithiumchlorid: Lithiumchlorid AnalaR NORMAPUR® ACS (VWR International GmbH) Magnesiumchlorid: Magnesiumchlorid wasserfrei zur Synthese (Merck KGaA) Lithiumbenzoat: Lithiumbenzoat 99% (SIGMA-ALDRICH CHEMIE GmbH) | | | |

Die erfindungsgemäßen Beispiele zeigen überraschenderweise bei gleichen Konzentrationen eine deutlich verringerte Kristallisationstemperatur im Vergleich zu den Vergleichsbeispielen, welche nur eine der beiden Komponenten der erfindungsgemäßen Beispiele enthalten.

### Beispiel 12-15:

Ein Polyamid 6 (Alphalon 27, Grupa Azoty ATT Polymers GmbH) wurde mit Nigrosin und/oder Metallsalz mit verschiedenen Verfahrensparametern in der Schmelze gemischt. Die Verarbeitung in der Schmelze wurde mit einem gleichläufigen Doppelschneckenextruder (Thermo Scientific Process 11) durchgeführt. Die Verfahrensparameter sind in Tabelle 2 dokumentiert. Die heiße Schmelze wurde dann in einem Wasserbad gekühlt und anschließend stranggranuliert. Die Zusammensetzungen sind in Tabelle 3 beschrieben. Für die Versuche wurde ein Gewichtsanteil von 0,5 Gewichts-% der Antinukleierungsmittel gewählt.

**Tabelle 2: Verfahrensparameter**

| **Versuchseinstellung** | **Schmelzetemperatur [°C]** | **Drehzahl [Umin-1]** | **Durchsatz [gh-1]** |
|---|---|---|---|
| **1** | 240 | 450 | 1000 |
| **2** | 260 | 150 | 1000 |
| **3** | 260 | 450 | 1000 |
| **4** | 260 | 750 | 1000 |

Die thermische Analyse der Compounds wurde entsprechend der Beschreibung für Beispiel 1-11 durchgeführt. Der erfindungsrelevante Kennwert T_{PC} ist in Tabelle 3 für alle Beispiele dargestellt.

**Tabelle 3: Zusammensetzungen und Kristallisationstemperaturen von erfindungsgemäßen Zusammensetzungen und Vergleichsbeispielen**

| **Beispiel** | **Additive** | **Versuchseinstellung** | **T_{PC} [°C]** |
|---|---|---|---|
| **Vergleichsbeispiel 12** | - | 1 | 187,1 |
| **Vergleichsbeispiel 13** | - | 2 | 186,7 |
| **Vergleichsbeispiel 1** | - | 3 | 186,9 |
| **Vergleichsbeispiel 14** | - | 4 | 186,7 |
| **Vergleichsbeispiel 15** | Nigrosin A | 1 | 182,2 |
| **Vergleichsbeispiel 16** | Nigrosin A | 2 | 179,8 |
| **Vergleichsbeispiel 2** | Nigrosin A | 3 | 181,2 |
| **Vergleichsbeispiel 17** | Nigrosin A | 4 | 181,2 |
| **Vergleichsbeispiel 18** | Lithiumchlorid | 1 | 182,0 |
| **Vergleichsbeispiel 19** | Lithiumchlorid | 2 | 182,3 |
| **Vergleichsbeispiel 7** | Lithiumchlorid | 3 | 180,7 |
| **Vergleichsbeispiel 20** | Lithiumchlorid | 4 | 180,2 |
| **Erfindungsgemäßes Beispiel 12** | Nigrosin A/Lithiumchlorid 1:1 | 1 | 177,8 |
| **Erfindungsgemäßes Beispiel 13** | Nigrosin A/Lithiumchlorid 1:1 | 2 | 177,4 |
| **Erfindungsgemäßes Beispiel 14** | Nigrosin A/Lithiumchlorid 1:1 | 3 | 175,1 |
| **Erfindungsgemäßes Beispiel 15** | Nigrosin A/Lithiumchlorid 1:1 | 4 | 179,3 |

| | | | |
|---|---|---|---|
| T_{PC}: Kristallisationstemperatur Nigrosin A: NIGROSINBASE BA01 (LANXESS Deutschland GmbH) Lithiumchlorid: Lithiumchlorid AnalaR NORMAPUR® ACS (VWR International GmbH) | | | |

Die erfindungsgemäßen Beispiele zeigen überraschenderweise selbst bei unterschiedlichen Prozessbedingungen eine deutlich verringerte Kristallisationstemperatur im Vergleich zu den Vergleichsbeispielen, welche nur eine der beiden Komponenten der erfindungsgemäßen Beispiele enthalten.

### Beispiel 16-17:

Ein Polyamid 6 (Alphalon 27, Grupa Azoty ATT Polymers GmbH) wurde mit Nigrosin und/oder Metallsalz in der Schmelze gemischt. Das Nigrosin wurde als Rohstoff und in Form eines Polyamid 6-Masterbatches, mit 20-Gewichts-% Nigrosin, eingesetzt. Die Zusammensetzungen sind in Tabelle 4 beschrieben.

Die Compound- sowie die Masterbatchherstellung erfolgte entsprechend der Beschreibung für Beispiel 1-11.

Die thermische Analyse der Compounds wurde entsprechend der Beschreibung für Beispiel 1-11 durchgeführt. Der erfindungsrelevante Kennwert T_{PC} ist in Tabelle 4 für alle Beispiele dargestellt.

**Tabelle 4: Zusammensetzungen und Kristallisationstemperaturen von erfindungsgemäßen Zusammensetzungen und Vergleichsbeispielen**

| **Beispiel** | **Additive** | **W [%]** | **T_{PC}[°C]** |
|---|---|---|---|
| **Vergleichsbeispiel 1** | - | 0 | 186,9 |
| **Vergleichsbeispiel 2** | Nigrosin A | 0,5 | 181,2 |
| **Vergleichsbeispiel 4** | Nigrosin A | 3,0 | 180,4 |
| **Vergleichsbeispiel 7** | Lithiumchlorid | 0,5 | 180,7 |
| **Vergleichsbeispiel 9** | Lithiumchlorid | 3,0 | 152,5 |
| **Vergleichsbeispiel 21** | Nigrosin A-MB20 | 0,5 | 178,6 |
| **Vergleichsbeispiel 22** | Nigrosin A-MB20 | 3,0 | 176,8 |
| **Erfindungsgemäßes Beispiel 3** | Nigrosin A/Lithiumchlorid 1:1 | 0,5 | 172,6 |
| **Erfindungsgemäßes Beispiel 5** | Nigrosin A/Lithiumchlorid 1:1 | 3,0 | 145,3 |
| **Erfindungsgemäßes Beispiel 16** | Nigrosin A-MB20/Lithiumchlorid 1:1 | 0,5 | 174,0 |
| **Erfindungsgemäßes Beispiel 17** | Nigrosin A-MB20/Lithiumchlorid 1:1 | 3,0 | 144,2 |

| | | | |
|---|---|---|---|
| T_{PC}: Kristallisationstemperatur; w: Massenanteil des(der) Additiv(e) Nigrosin A: NIGROSINBASE BA01 (LANXESS Deutschland GmbH) Lithiumchlorid: Lithiumchlorid AnalaR NORMAPUR® ACS (VWR International GmbH) | | | |

Die erfindungsgemäßen Beispiele zeigen überraschenderweise bei gleichen Konzentrationen auch bei Einarbeitung einer Komponente in Formeines Masterbatches eine deutlich verringerte Kristallisationstemperatur im Vergleich zu den Vergleichsbeispielen, welche nur eine der beiden Komponenten der erfindungsgemäßen Beispiele enthalten.

### Beispiel 18-19:

Ein Polyamid 6 (Alphalon 27, Grupa Azoty ATT Polymers GmbH) wurde mit Nigrosin und/oder Metallsalz in der Schmelze gemischt. Die Zusammensetzungen sind in Tabelle 5 beschrieben. Alle Compounds wurden mit 0,15 Gewichts-% Irgafos 168 (BASF SE), 0,15 Gewichts-% Irganox 1098 (BASF SE) und 0,2 Gewichts-% Ceasit AV/PA (Baerlocher GmbH) stabilisiert.

Die Verarbeitung in der Schmelze wurde mit einem gleichläufigen Doppelschneckenextruder (Leistritz MIC 27 GL/44D) durchgeführt. Die Schneckendrehzahl betrug 300 1/min, bei einem Durchsatz von 5 kg/h und einer Schmelzetemperatur von 260°C. Die heiße Schmelze wurde dann in einem Wasserbad gekühlt und anschließend stranggranuliert.

Die thermische Analyse der Compounds wurde entsprechend der Beschreibung für Beispiel 1-11 durchgeführt. Der erfindungsrelevante Kennwert T_{PC} ist in Tabelle 5 für alle Beispiele dargestellt.

**Tabelle 5: Zusammensetzungen und Kristallisationstemperaturen von erfindungsgemäßen Zusammensetzungen und Vergleichsbeispielen**

| **Beispiel** | **Additive** | **W [%]** | **T_{PC} [°C]** |
|---|---|---|---|
| **Vergleichsbeispiel 23** | - | 0 | 188,5 |
| **Vergleichsbeispiel 24** | Nigrosin B | 0,5 | 180,4 |
| **Vergleichsbeispiel 25** | Nigrosin B | 1,5 | 173,9 |
| **Vergleichsbeispiel 26** | Lithiumchlorid | 0,5 | 184,4 |
| **Vergleichsbeispiel 27** | Lithiumchlorid | 1,5 | 178,2 |
| **Erfindungsgemäßes Beispiel 18** | Nigrosin B/Lithiumchlorid 1:1 | 0,5 | 173,5 |
| **Erfindungsgemäßes Beispiel 19** | Nigrosin B/Lithiumchlorid 1:1 | 1,5 | 172,9 |

| | | | |
|---|---|---|---|
| T_{PC}: Kristallisationstemperatur; w: Massenanteil des(der) Additiv(e) Nigrosin B: NUBIAN® BLACK TN-870 (ORIENT CHEMICAL INDUSTIRES CO., LTD.) Lithiumchlorid: Lithiumchlorid AnalaR NORMAPUR® ACS (VWR International GmbH) | | | |

Die erfindungsgemäßen Beispiele zeigen auch im vergrößerten Verarbeitungsmaßstab und in Anwesenheit von Stabilisatorsystemen überraschenderweise bei gleichen Konzentrationen eine deutlich verringerte Kristallisationstemperatur im Vergleich zu den Vergleichsbeispielen, welche nur eine der beiden Komponenten der erfindungsgemäßen Beispiele enthalten.

### Beispiel 20-21:

Ein Polyamid 6 (Alphalon 27, Grupa Azoty ATT Polymers GmbH) wurde mit Nigrosin und/oder Metallsalz in der Schmelze gemischt. Die Zusammensetzungen sind in Tabelle 6 beschrieben. Alle Compounds wurden mit 0,15 Gewichts-% Irgafos 168 (BASF SE), 0,15 Gewichts-% Irganox 1098 (BASF SE) und 0,2 Gewichts-% Ceasit AV/PA (Baerlocher GmbH) stabilisiert.

Die Compoundherstellung erfolgte entsprechend der Beschreibung für Beispiel 19-20.

Aus den Compounds wurden Probekörper vom Typ 1A nach DIN EN ISO 527-2 hergestellt. Die Herstellung der Probekörper erfolgte in Anlehnung an die DIN EN ISO 294-1 mit einer Klöckner Ferromatik Desma Spritzgussmaschine vom Typ FX 75-2F bei 260°C.

Die Probekörper wurden gemäß DIN EN ISO 1110 beschleunigt konditioniert. Dazu wurden die Probekörper für 10 Tage in einem Klimaschrank, in einem Klima von (70 ± 1) °C und (62 ± 1) % relativer Feuchte (psychometrische Temperaturdifferenz von (10 ± 3) °C) gelagert, bis die Probekörper eine Feuchteaufnahme von mindestens 95 % ihres Gleichgewichtsniveaus erreicht hatten.

Die thermische Analyse der Compounds wurde entsprechend der Beschreibung für Beispiel 1-11, jedoch an Dünnschnitte (300 µm) der spritzgegossenen und konditionierten Probekörper, durchgeführt. Der erfindungsrelevante Kennwert T_{PC} ist in Tabelle 6 für alle Beispiele dargestellt.

**Tabelle 6: Zusammensetzungen und Kristallisationstemperaturen von erfindungsgemäßen Zusammensetzungen und Vergleichsbeispielen**

| **Beispiel** | **Additive** | **W [%]** | **T_{PC} [°C]** |
|---|---|---|---|
| **Vergleichsbeispiel 28** | - | 0 | 189,1 |
| **Vergleichsbeispiel 29** | Nigrosin B | 0,5 | 179,7 |
| **Vergleichsbeispiel 30** | Nigrosin B | 1,5 | 174,0 |
| **Vergleichsbeispiel 31** | Lithiumchlorid | 0,5 | 178,0 |
| **Vergleichsbeispiel 32** | Lithiumchlorid | 1,5 | 173,2 |
| **Erfindungsgemäßes Beispiel 20** | Nigrosin B/Lithiumchlorid 1:1 | 0,5 | 175,9 |
| **Erfindungsgemäßes Beispiel 21** | Nigrosin B/Lithiumchlorid 1:1 | 1,5 | 166,9 |

| | | | |
|---|---|---|---|
| T_{PC}: Kristallisationstemperatur; w: Massenanteil des(der) Additiv(e) Nigrosin B: NUBIAN® BLACK TN-870 (ORIENT CHEMICAL INDUSTIRES CO., LTD.) Lithiumchlorid: Lithiumchlorid AnalaR NORMAPUR® ACS (VWR International GmbH) | | | |

Die erfindungsgemäßen Beispiele zeigen überraschenderweise bei gleichen Konzentrationen auch nach der Verarbeitung im Spritzgussverfahren eine deutlich verringerte Kristallisationstemperatur im Vergleich zu den Vergleichsbeispielen, welche nur eine der beiden Komponenten der erfindungsgemäßen Beispiele enthalten.

### Beispiel 22:

Ein Polyamid 6 (Alphalon 27, Grupa Azoty ATT Polymers GmbH) wurde mit Nigrosin und/oder Metallsalz in der Schmelze gemischt. Die Zusammensetzungen sind in Tabelle 7 beschrieben. Alle Compounds wurden mit 0,15 Gewichts-% Irgafos 168 (BASF SE), 0,15 Gewichts-% Irganox 1098 (BASF SE) und 0,2 Gewichts-% Ceasit AV/PA (Baerlocher GmbH) stabilisiert. Für die Versuche wurde ein Gewichtsanteil von 1,5 Gewichts-% der Antinukleierungsmittel gewählt.

Die Compoundherstellung erfolgte entsprechend der Beschreibung für Beispiel 19-20.

Die thermische Analyse der Compounds wurde mittels dynamischer Differenzkalorimetrie (DSC) in Anlehnung an die DIN EN ISO 11357-7:2013-04 durchgeführt. Zur Untersuchung des Schmelz- und Kristallisationsverhaltens wurde eine DSC 822e (Mettler-Toledo AG) mit einem konstanten Stickstoffdurchfluss von 20 ml 1/min und einer Stickstoffkühlung verwendet. Die Temperatur und der Wärmestrom wurden mit Indium und Zink kalibriert. Die Probemenge betrug immer 5 mg mit einer Abweichung von ±0,1 mg. Verwendet wurde ein Aluminium-Tiegel. Die Proben wurden mit 50 °C min-1 von 0°C auf 250 °C erhitzt und dort für 10 min gehalten, um alle Kristallite aufzuschmelzen. Danach wurden die Proben mit 100 °C min-1 auf die relevanten isothermen Kristallisationstemperaturen abgekühlt und dort bis zum vollständigen Auskristallisieren der Proben gehalten. Es wurden isotherme Kristallisationstemperaturen zwischen 194 und 200°C, mit einer Schrittweite von 2°C, verwendet.

Das Verhältnis zwischen der Kristallinität zur Zeit t und der Kristallinität am Ende der Kristallisation wird als relative Kristallinität α bezeichnet. Für jede isotherme Kristallisationstemperatur wurde die Änderung von α in Abhängigkeit der Zeit aufgezeichnet. Die Zeit bis zum Erreichen der relativen Kristallinität von 0,5 (t_{0,5}) ist ein Maß für die isotherme Kristallisationsgeschwindigkeit.
Der erfindungsrelevante Kennwert t_{0,5} ist in Tabelle 7 in Abhängigkeit der isothermen Kristallisationstemperatur für alle Beispiele dargestellt.

**Tabelle 7: Zusammensetzungen und t_{0,5} von erfindungsgemäßen Zusammensetzungen und Vergleichsbeispielen**

| **Beispiel** | **Additive** | **Tᵢ [°C]** | **T_{0,5} [min]** |
|---|---|---|---|
| **Vergleichsbeispiel 33** | - | 198 | 1,3 |
| | | 200 | 1,8 |
| | | 202 | 2,6 |
| **Vergleichsbeispiel 34** | Nigrosin B | 196 | 9,7 |
| | | 198 | 11,1 |
| | | 200 | 15,0 |
| **Vergleichsbeispiel 35** | Lithiumchlorid | 196 | 6,9 |
| | | 198 | 7,9 |
| | | 200 | 8,08 |
| **Erfindungsgemäßes Beispiel 22** | Nigrosin B/Lithiumchlorid 1:1 | 194 | 11,0 |
| | | 196 | 15,1 |
| | | 198 | 23,9 |

| | | | |
|---|---|---|---|
| T_{PC}: Kristallisationstemperatur; Tᵢ: isotherme Kristallisationstemperatur; t_{0,5}: Zeit bis zum Erreichen der relativen Kristallinität von 0,5 Nigrosin B: NUBIAN® BLACK TN-870 (ORIENT CHEMICAL INDUSTIRES CO., LTD.) Lithiumchlorid: Lithiumchlorid AnalaR NORMAPUR® ACS (VWR International GmbH) | | | |

Die erfindungsgemäßen Beispiele zeigen überraschenderweise bei gleichen Konzentrationen auch eine deutlich verlängerte Zeit bis zum Erreichen der relativen Kristallinität von 0,5 im Vergleich zu den Vergleichsbeispielen, welche nur eine der beiden Komponenten der erfindungsgemäßen Beispiele enthalten.

### Beispiel 23:

Ein Polyamid 6.6 (Radipol A45, RADICI CHIMICA S.p.A.) wurde mit einem Nigrosin und/oder einem Metallsalz in der Schmelze gemischt. Die Zusammensetzungen sind in Tabelle 8 beschrieben. Die Verarbeitung in der Schmelze wurde analog Beispiel 1-11 durchgeführt.
Die Schmelzetemperatur betrug 285°C.

Die thermische Analyse der Compounds wurde analog Beispiel 1-11 durchgeführt. Die Proben wurden mit 10°C min-1 von 0°C auf 300°C erhitzt und dort für 3 min gehalten. Danach wurde die Probe mit 10°C min-1 wieder auf 0°C abgekühlt. Dieser Zyklus wurde zweimal wiederholt. Der erfindungsrelevante Kennwert T_{PC} ist in Tabelle 8 für alle Beispiele dargestellt.

**Tabelle 8: Zusammensetzungen und Kristallisationstemperaturen von erfindungsgemäßen Zusammensetzungen und Vergleichsbeispielen**

| **Beispiel** | **Additive** | **W [%]** | **T_{PC} [°C]** |
|---|---|---|---|
| **Vergleichsbeispiel 36** | - | 0 | 229,4 |
| **Vergleichsbeispiel 37** | Nigrosin A | 3,0 | 218,0 |
| **Vergleichsbeispiel 38** | Lithiumchlorid | 3,0 | 201,6 |
| **Erfindungsgemäßes Beispiel 23** | Nigrosin A/Lithiumchlorid 1:1 | 3,0 | 191,1 |

| | | | |
|---|---|---|---|
| T_{PC}: Kristallisationstemperatur; w: Massenanteil des(der) Additiv(e) Nigrosin A: NIGROSINBASE BA01 (LANXESS Deutschland GmbH) Lithiumchlorid: Lithiumchlorid AnalaR NORMAPUR® ACS (VWR International GmbH) | | | |

Die erfindungsgemäßen Beispiele zeigen überraschenderweise bei gleichen Konzentrationen eine deutlich verringerte Kristallisationstemperatur im Vergleich zu den Vergleichsbeispielen, welche nur eine der beiden Komponenten der erfindungsgemäßen Beispiele enthalten.

## Patentansprüche

1. Polymerzusammensetzung, enthaltend oder bestehend aus
a) einer Matrix aus mindestens einem kristallisationsfähigem thermoplastischen Polymeren,
b) mindestens einem Azinfarbstoff, sowie
c) mindestens einem ein-, zwei-, drei- und/oder vierwertigem Metallsalz, ausgewählt aus der Gruppe bestehend aus Metallchloriden, Metallbromiden und Metallpseudohalogeniden sowie Mischungen oder Kombinationen hiervon.

2. Polymerzusammensetzung nach Anspruch 1, **dadurch gekennzeichnet, dass** der mindestens eine Azinfarbstoff ausgewählt ist aus der Gruppe bestehend aus Phenazin-Farbstoffen, Oxazin-Farbstoffen, Thiazin-Farbstoffen und/oder Bisazin-Farbstoffen, insbesondere ausgewählt ist aus der Gruppe bestehend aus Nigrosinen und/oder Indulinen.

3. Polymerzusammensetzung nach einem der vorhergehenden Ansprüche, **dadurch gekennzeichnet, dass** das mindestens eine ein-, zwei-, drei- und/oder vierwertige Metallsalz ausgewählt ist aus der Gruppe bestehend aus Alkalimetallsalzen sowie Erdalkalimetallsalzen, bevorzugt Alkalimetallhalogeniden oder -pseudohalogeniden sowie Erdalkalimetallhalogeniden oder-pseudohalogeniden, insbesondere Lithiumchlorid, Lithiumbromid, Lithiumbenzoat, Magnesiumchlorid, Calciumchlorid und/oder Zinkchlorid.

4. Polymerzusammensetzung nach einem der vorhergehenden Ansprüche, **dadurch gekennzeichnet, dass** das Gewichtsverhältnis des mindestens einen Azinfarbstoffes zum mindestens einen ein-, zwei-, drei- und/oder vierwertigem Metallsalz von 1:99 bis 99:1, bevorzugt von 10:90 bis 90:10, weiter bevorzugt von 80:20 bis 20:80 beträgt.

5. Polymerzusammensetzung nach vorhergehendem Anspruch, **dadurch gekennzeichnet, dass** das mindestens eine kristallisationsfähige thermoplastische Polymere der Polymermatrix ausgewählt ist aus der Gruppe bestehend aus
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Pololefin-keton-copolymere
b) Polyacetale, wie z.B. Polyoxymethylen (POM) oder Copolymere mit z.B. Butanal,
c) Polyphenylenoxide und Blends mit Polystyrol oder Polyamiden,
d) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol,
e) Polyimide, Polyamid-imide, Polyetherimide, Polyesterimide, Poly(ether)ketone, Polyarylsulfone, Polyphenylensulfid, Polybenzimidazole, Polyhydantoine,
f) Polyester aus aliphatischen oder aromatischen Dicarbonsäuren oder Diolen oder aus Hydroxy-Carbonsäuren wie z.B. Polyethylenterephthalat (PET), Polybutylenterephthalat (PBT), Polypropylenterephthalat (PPT), Polyethylennaphthylat, Poly-1,4-dimethylolcyclohexanterephthalat, Polyhydroxybenzoat, Polyhydroxynaphthylat, Polymilchsäure (PLA), Polyhydroxybutyrat (PHB), Polyhdroxyvalerat (PHV),
g) sowie Mischungen, Kombinationen oder Blends aus zwei oder mehr der zuvor genannten Polymere und/oder Mischungen, Kombinationen und Blends mit amorphen Polymeren.

6. Polymerzusammensetzung nach einem der vorhergehenden Ansprüche, enthaltend oder bestehend aus
a) 99,98 bis 80,00 Gew.-Teilen, bevorzugt 99,96 bis 94 Gew.-Teilen einer Matrix aus mindestens einem kristallisationsfähigem thermo-plastischen Polymeren, insbesondere mindestens einem Polyamid oder Polyester;
b) b) 0,01 bis 10 Gew.-Teilen, bevorzugt 0,02 bis 3 Gew.-Teilen mindestens eines Azinfarbstoffs, insbesondere mindestens eines Nigrosins sowie
c) 0,01 bis 10 Gew.-Teilen, bevorzugt 0,02 bis 3 Gew.-Teilen mindestens eines ein-, zwei-, drei- und/oder vierwertigen Metallsalzes, insbesondere mindestens eines alkali- oder Erdalkalimetallhalogenids oder - pseudo - halogenids,
wobei sich die Gewichtsteile der Bestandteile a) bis c) zu 100 Gew.-Teilen addieren.

7. Polymerzusammensetzung nach einem der vorhergehenden Ansprüche, **dadurch gekennzeichnet, dass** sie zusätzlich zu den Bestandteilen a) bis c) mindestens eine Zusatzstoff, ausgewählt aus der Gruppe bestehend aus UV-Absorbern, der Lichtstabilisatoren, der Stabilisatoren, der Hydroxylamine, der Benzofuranone, der Metalldesaktivatoren, der Füllstoffdesaktivatoren, der Nukleierungsmitteln, Schlagzähigkeitsverbesserern, Flammschutzmittel, Weichmachern, Gleitmitteln, Rheologiemodifikatoren, Kettenverlängerer, Verarbeitungshilfsmitteln, Pigmenten, Farbstoffen, optische Aufhellern, antimikrobiellen Wirkstoffen, Antistatika, Slipmitteln, Antiblockmitteln, Kopplungsmitteln, Dispergiermitteln, Kompatibilisatoren, Sauerstofffängern, Säurefängern, Markierungsmitteln, Antifoggingmitteln, Füll/Verstärkungsstoffe sowie Mischung und Kombinationen aus mindestens zwei der zuvor genannten Zusatzstoffen enthält oder hieraus besteht.

8. Polymerzusammensetzung nach einem der vorhergehenden Ansprüche, **dadurch gekennzeichnet, dass** der mindestens eine Azinfarbstoff und/oder das mindestens eine ein-, zwei-, drei- und/oder vierwertige Metallsalz mittels eines Masterbatches, insbesondere eines Masterbatches oder hinsichtlich der Polymerzusammensetzung identisch mit der Matrix aus dem mindestens einen kristallisationsfähigem Material ist, eingearbeitet wurde.

9. Polymerzusammensetzung nach einem der vorhergehenden Ansprüche, **dadurch gekennzeichnet, dass** im Vergleich zu einer Polymerzusammensetzung, die keinen Azinfarbstoff und/oder ein ein-, zwei-, drei- und/oder vierwertiges Metallsalz beinhaltet, ihr Kristallisationspunkt herabgesetzt, ihre Kristallisationsgeschwindigkeit geringer und/oder ihr Kristallisatsionsverhalten verzögert ist.

10. Additivzusammensetzung zur Verzögerung der Kristallisation, zur von kristallisationsfähigen thermoplastischen Polymeren oder Polymerzusammensetzungen, bestehend aus oder enthaltend
a) mindestens einem Azinfarbstoff wobei der mindestens eine Azinfarbstoff bevorzugt ausgewählt ist aus der Gruppe bestehend aus Phenazin-Farbstoffen, Oxazin-Farbstoffen, Thiazin-Farbstoffen und/oder Bisazin-Farbstoffen, insbesondere ausgewählt ist aus der Gruppe bestehend aus Nigrosinen und/oder Indulinen, sowie
b) mindestens einem ein-, zwei-, drei- und/oder vierwertigem Metallsalz, ausgewählt aus der Gruppe bestehend aus Metallchloriden, Metallbromiden und Metallpseudohalogeniden sowie Mischungen oder Kombinationen hiervon, wobei Additivzusammensetzung nach einem der beiden vorhergehenden Ansprüche, **dadurch gekennzeichnet, dass** das mindestens eine ein-, zwei-, drei- und/oder vierwertige Metallsalz ausgewählt ist aus der Gruppe bestehend aus Alkalimetallsalzen sowie Erdalkalimetallsalzen, bevorzugt Alkalimetallhalogeniden oder -pseudohalogeniden sowie Erdalkalimetallhalogeniden oder -pseudohalogeniden , insbesondere Lithiumchlorid, Lithiumbromid, Lithiumbenzoat, Magnesiumchlorid, Calciumchlorid und/oder Zinkchlorid.

11. Additivzusammensetzung nach dem vorhergehenden Anspruch, **dadurch gekennzeichnet, dass** das Gewichtsverhältnis des mindestens einen Azinfarbstoffes zum mindestens einen ein-, zwei-, drei- und/oder vierwertigem Metallsalz von 1:99 bis 99:1, bevorzugt von 10:90 bis 90:10, weiter bevorzugt von 80:20 bis 20:80 beträgt, wobei die Additivzusammensetzung frei von Übergangsmetallhalogeniden, bevorzugt zusätzlich frei von Metalliodiden und/oder Übergangsmetallsalzen im Allgemeinen ist.

12. Verfahren zur Verzögerung der Kristallisation, zur Erniedrigung der Kristallisationsgeschwindigkeit, zur und/oder zur Erniedrigung der Kristallisatsionstemperatur eines kristallisationsfähigen thermoplastischen Polymeren, bei dem eine Additivzusammensetzung nach einem der beiden vorhergehenden Ansprüche in eine Polymermatrix, enthaltend oder bestehend aus mindestens einem kristallisationsfähigem thermo-plastischen Polymeren zugegeben wird, die Polymermatrix in die Schmelze überführt und anschließend abgekühlt wird oder die Additivzusammensetzung nach einem der beiden vorhergehenden Ansprüche in eine in schmelzflüssigem Zustand befindliche Polymermatrix, enthaltend oder bestehend aus mindestens einem kristallisationsfähigem thermo-plastischen Polymeren eingearbeitet und anschließend abgekühlt wird.

13. Verfahren nach vorhergehendem Anspruch, **dadurch gekennzeichnet, dass** die Additivzusammensetzung oder einzelne Komponenten der Additivzusammensetzung in Form eines Masterbatches oder Konzentrates eingebracht wird, wobei der Masterbatch bevorzugt eine Matrix aus mindestens einem kristallisationsfähigen, thermoplastischen Polymeren umfasst, in der die Additivzusammensetzung vorliegt, die identisch mit der Matrix der Polymerzusammensetzung

14. Verwendung einer Additivzusammensetzung nach einem der Ansprüche 10 bis 11 zur Kristallisationsverzögerung und/oder zur Erniedrigung des Kristallisationspunktes von kristallisationsfähigen thermoplastischen Polymeren.

15. Formteil herstellbar aus einer Polymerzusammensetzung nach einem der Ansprüche 1 bis 9, insbesondere mittels Spritzguss, Extrusion, generativen Fertigungsverfahren, 3D-Druckverfahren, Tiefzieh- und Blasformverfahren.

## Claims

1. Polymer composition, comprising or consisting of
a) a matrix made of at least one crystallisable, thermoplastic polymer,
b) at least one azine dye, and also
c) at least one mono-, bi-, tri- and/or tetravalent metal salt, selected from the group consisting of metal chlorides, metal bromides and metal pseudohalogenides and also mixtures or combinations hereof.

2. Polymer composition according to claim 1, **characterised in that** the at least one azine dye is selected from the group consisting of phenazine dyes, oxazine dyes, thiazine dyes and/or bisazine dyes, preferably is selected from the group consisting of nigrosines and/or indulines.

3. Polymer composition according to one of the preceding claims, **characterised in that** the at least one mono-, bi-, tri- and/or tetravalent metal salt is selected from the group consisting of alkali metal salts and also alkaline earth metal salts, preferably alkali metal halogenides or -pseudohalogenides, and also alkaline earth metal halogenides or -pseudohalogenides, in particular lithium chloride, lithium bromide, lithium benzoate, magnesium chloride, calcium chloride and/or zinc chloride.

4. Polymer composition according to one of the preceding claims, **characterised in that** the weight ratio of the at least one azine dye to the at least one mono-, bi-, tri- and/or tetravalent metal salt is from 1 : 99 to 99 : 1, preferably from 10 : 90 to 90 : 10, further preferred from 80 : 20 to 20 : 80.

5. Polymer composition according to the preceding claim, **characterised in that** the at least one crystallisable, thermoplastic polymer of the polymer matrix is thereby selected from the group consisting of
a) polymers of olefins or diolefins, such as e.g. polyethylene (LDPE, LLDPE, VLDPE, ULDPE, MDPE, HDPE, UHMWPE), metallocene-PE (m-PE), polypropylene, polyolefin-ketone copolymer
b) polyacetals, such as e.g. polyoxymethylene (POM) or copolymers with e.g. butanal,
c) polyphenylene oxides and blends with polystyrene or polyamides,
d) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid and aromatic diamines, such as e.g. 1,4- or 1,3-diaminobenzene,
e) polyimides, polyamide imides, polyetherimides, polyesterimides, poly(ether)ketones, polyarylsulphones, polyphenylensulphide, polybenzimidazoles, polyhydantoins,
f) polyesters made of aliphatic or aromatic dicarboxylic acids or diols or from hydroxycarboxylic acids, such as e.g. polyethylene terephthalate (PET), polybutylene terephthalate (PBT), polypropylene terephthalate (PPT), polyethylene naphthylate, poly-1,4-dimethylolcyclohexane terephthalate, polyhydroxybenzoate, polyhydroxynaphthylate, polylactic acid (PLA), polyhydroxybutyrate (PHB), polyhydroxyvalerate (PHV),
g) and also mixtures, combinations or blends of two or more of the previously mentioned polymers and/or mixtures, combinations and blends with amorphous polymers.

6. Polymer composition according to one of the preceding claims, comprising or consisting of
a) 99.98 to 80.00 parts by weight, preferably 99.96 to 94 parts by weight, of a matrix made of at least one crystallisable, thermoplastic polymer,
b) 0.01 to 10 parts by weight, preferably 0.02 to 3 parts by weight, of at least one azine dye and also
c) 0.01 to 10 parts by weight, preferably 0.02 to 3 parts by weight, of at least one mono-, bi-, tri- and/or tetravalent metal salt,
the parts by weight of components a) to c) adding up to 100 parts by weight.

7. Polymer composition according to one of the preceding claims, **characterised in that**, in addition to components a) to c), it comprises at least one additive selected from the group consisting of UV absorbers, light stabilisers, stabilisers, hydroxylamines, benzofuranones, metal deactivators, filler deactivators, nucleation agents, impact strength enhancers, flame retardants, plasticisers, lubricants, rheology modifiers, chain lengtheners, processing aids, pigments, colourants, optical brighteners, antimicrobial active substances, antistatic agents, slip agents, antiblocking agents, coupling means, dispersants, compatibilisers, oxygen collectors, acid collectors, marking means, anti-fogging means, filler/reinforcing materials and also a mixture and combinations of at least two of the previously mentioned additives or consists hereof.

8. Polymer composition according to one of the preceding claims, **characterised in that** the at least one azine dye and/or the at least one mono-, bi-, tri- and/or tetravalent metal salt was incorporated by means of a master batch, in particular a master batch with respect to the polymer composition, identical to the matrix made of the at least one crystallisable material.

9. Polymer composition according to one of the preceding claims, **characterised in that**, in comparison to a polymer composition which comprises no azine dye and/or a mono-, bi-, tri- and/or tetravalent metal salt, the crystallisation point thereof is reduced, the crystallisation speed thereof is lower and/or the crystallisation behaviour thereof is delayed.

10. Additive composition for delaying crystallisation of crystallisable, thermoplastic polymers or polymer compositions, consisting of or comprising
a) at least one azine dye, wherein preferably the at least one azine dye is selected from the group consisting of phenazine dyes, oxazine dyes, thiazine dyes and/or bisazine dyes, in particular is selected from the group consisting of nigrosines and/or indulines and also
b) at least one mono-, bi-, tri- and/or tetravalent metal salt, selected from the group consisting of metal chlorides, metal bromides and metal pseudohalogenides and also mixtures or combinations hereof, wherein preferably the at least one mono-, bi-, tri- and/or tetravalent metal salt is selected from the group consisting of alkali metal salts and also alkaline earth metal salts, preferably alkali metal halogenides or -pseudohalogenides, and also alkaline earth metal halogenides or -pseudohalogenides, in particular lithium chloride, lithium bromide, lithium benzoate, magnesium chloride, calcium chloride and/or zinc chloride.

11. Additive composition according to the precoding claim, **characterised in that** the weight ratio of the at least one azine dye to the at least one mono-, bi-, tri- and/or tetravalent metal salt is from 1 : 99 to 99 : 1, preferably from 10 : 90 to 90 : 10, further preferably from 80 : 20 to 20 : 80, the additive composition being generally free of transition metal halogenides, preferably in addition free of metal iodides and/or transition metal salts.

12. Method for delaying crystallisation, for reducing the crystallisation speed, and/or for lowering the crystallisation temperature of a crystallisable, thermoplastic polymer, in which an additive composition according to one of the both preceding claims is added to a polymer matrix, comprising or consisting of at least one crystallisable, thermoplastic polymer, the polymer matrix is transferred into the melt and subsequently cooled, or the additive composition according to one of the both preceding claims incorporated in a polymer matrix in the molten state, comprising or consisting of at least one crystallisable, thermoplastic polymer, and subsequently is cooled.

13. Method according to the preceding claim, **characterised in that** the additive composition or individual components of the additive composition are introduced in the form of a master batch or concentrate, the master batch preferably comprising a matrix made of at least one crystallisable, thermoplastic polymer, in which master batch the additive composition, which is identical to the matrix of the polymer composition, is present.

14. Use of an additive composition according to one of the claims 10 to 11 for crystallisation delay, and/or for lowering the crystallisation point of crystallisable, thermoplastic polymers.

15. Moulded part producible from a polymer composition according to one of the claims 1 to 9, in particular by means of injection moulding, extrusion, generative manufacturing methods, 3D printing methods, deep-drawing- and blow-moulding methods.

## Revendications

1. Composition polymère contenant ou constituée de
a) une matrice faite d'au moins un polymère thermoplastique apte à cristalliser,
b) au moins un colorant azinique, ainsi que
c) au moins un sel métallique mono-, di-, tri- et/ou tétravalent choisi dans le groupe constitué par des chlorures métalliques, des bromures métalliques et des pseudo-halogénures métalliques, ainsi que des mélanges ou des combinaisons de ces substances.

2. Composition polymère selon la revendication 1, **caractérisée en ce que** ledit au moins un colorant azinique est choisi dans le groupe constitué par des colorants phénaziniques, des colorants oxaziniques, des colorants thiaziniques et/ou des colorants bisaziniques, en particulier choisi dans le groupe constitué par des nigrosines et/ou des indulines.

3. Composition polymère selon l'une des revendications précédentes, **caractérisée en ce que** ledit au moins un sel métallique mono-, di-, tri- ou tétravalent est choisi dans le groupe constitué par des sels de métaux alcalins ainsi que des sels de métaux alcalino-terreux, de préférence des halogénures ou pseudo-halogénures de métaux alcalins ainsi que des halogénures ou pseudo-halogénures de métaux alcalino-terreux, en particulier le chlorure de lithium, le bromure de lithium, le benzoate de lithium, le chlorure de magnésium, le chlorure de calcium et/ou le chlorure de zinc.

4. Composition polymère selon l'une des revendications précédentes, **caractérisée en ce que** le ratio en poids dudit au moins un colorant azinique sur ledit au moins un sel métallique mono-, di-, tri- et/ou tétravalent va de 1:99 à 99:1, de préférence de 10:90 à 90:10 et plus préférentiellement de 80:20 à 20:80.

5. Composition polymère selon la revendication précédente, **caractérisée en ce que** ledit au moins un polymère thermoplastique apte à cristalliser de la matrice polymère est choisi dans le groupe constitué par
a) des polymères d'oléfines ou de dioléfines tels que, par exemple, le polyéthylène (PEBD, PEBDL, PETBD, PEUBD, PEMD, PEHD, PEUHPM), le PE métallocène (PEm), le polypropylène, des copolymères de polyoléfine et de cétone,
b) des polyacétals tels que, par exemple, le polyoxyméthylène (POM) ou des copolymères avec, par exemple, le butanal,
c) des polyoxydes de phénylène et des alliages avec du polystyrène ou des polyamides,
d) des polyamides tels que, par exemple, le polyamide 6, 6.6, 6.10, 4.6, 4.10, 6.12, 12.12, le polyamide 11, le polyamide 12, ainsi que des polyamides (partiellement) aromatiques tels que, par exemple, des polyphtalamides, par exemple obtenus à partir de l'acide téréphtalique et/ou de l'acide isophtalique et de diamines aliphatiques ou à partir d'acides dicarboxyliques aliphatiques tels que, par exemple, l'acide adipique ou l'acide sébacique et de diamines aromatiques telles que, par exemple, le 1,4- ou 1,3-diaminobenzène,
e) des polyimides, des polyamide-imides, des polyéther-imides, des polyesterimides, des polyéther-cétones, des polyarylsulfones, le polysulfure de phénylène, des polybenzimidazoles, des polyhydantoïnes,
f) des polyesters d'acides dicarboxyliques ou de diols aliphatiques ou aromatiques ou d'acides hydroxycarboxyliques tels que, par exemple, le polytéréphtalate d'éthylène (PET), le polytéréphtalate de butylène (PBT), le polytéréphtalate de propylène (PPT), le polynaphtylate d'éthylène, le polytéréphtalate de 1,4-diméthylolcyclohexane, le polyhydroxybenzoate, le polyhydroxynaphtylate, l'acide polylactique (PLA), le polyhydroxybutyrate (PHB), le polyhydroxyvalérate (PHV),
g) ainsi que des mélanges, des combinaisons ou des alliages de deux ou plus des polymères précités et/ou des mélanges, des combinaisons et des alliages avec des polymères amorphes.

6. Composition polymère selon l'une des revendications précédentes, contenant ou constituée de
a) 99,98 à 80,00 parties en poids, de préférence 99,96 à 94 parties en poids d'une matrice faite d'au moins un polymère thermoplastique apte à cristalliser, en particulier d'au moins un polyamide ou polyester,
b) 0,01 à 10 parties en poids, de préférence 0,02 à 3 parties en poids d'au moins d'un colorant azinique, en particulier d'au moins une nigrosine, ainsi que
c) 0,01 à 10 parties en poids, de préférence 0,02 à 3 parties en poids d'au moins un sel métallique mono-, di, tri- ou tétravalent, en particulier d'au moins un halogénure ou pseudo-halogénure de métal alcalin ou de métal alcalino-terreux,
la somme des parties en poids des constituants a) à c) étant égale à 100 parties en poids.

7. Composition polymère selon l'une des revendications précédentes, **caractérisée en ce que**, en plus des constituants a) à c), elle contient ou est constituée d'au moins un additif choisi dans le groupe constitué par des absorbeurs d'UV, des agents photostabilisants, des stabilisants, des hydroxylamines, des benzofuranones, des désactivateurs de métaux, des désactivateurs de matières de charge, des agents de nucléation, des agents améliorant la résistance au choc, des agents ignifugeants, des plastifiants, des agents lubrifiants, des modificateurs de rhéologie, des agents d'allongement de chaîne, des adjuvants de transformation, des pigments, des colorants, des azurants optiques, des substances actives antimicrobiennes, des agents antistatiques, des agents de glissement, des agents anti-adhérence, des agents de couplage, des agents dispersants, des agents de compatibilité, des agents piégeurs d'oxygène, des agents piégeurs d'acide, des agents de marquage, des agents antivoile, des matières de charge/renfort, ainsi que des mélanges et des combinaisons d'au moins deux des additifs précités.

8. Composition polymère selon l'une des revendications précédentes, **caractérisée en ce que** ledit au moins un colorant azinique et/ou ledit au moins un sel métallique mono-, di-, tri- ou tétravalent a été incorporé au moyen d'un mélange maître, en particulier d'un mélange maître qui, du point de vue de la composition polymère, est un matériau identique à la matrice faite dudit au moins un polymère apte à cristall iser.

9. Composition polymère selon l'une des revendications précédentes, **caractérisée en ce que**, comparée à une composition polymère qui ne contient pas de colorant azinique et/ou de sel métallique mono-, di-, tri- et/ou tétravalent, son point de cristallisation est abaissé, sa vitesse de cristallisation est réduite et/ou son comportement de cristallisation est retardé.

10. Composition additive destinée à retarder la cristallisation de polymères ou de compositions polymères thermoplastiques aptes à cristalliser, constituée de ou contenant
a) au moins un colorant azinique, ledit au moins un colorant azinique étant de préférence choisi dans le groupe constitué par des colorants phénaziniques, des colorants oxaziniques, des colorants thiaziniques et/ou des colorants bisaziniques, en particulier choisi dans le groupe constitué par des nigrosines et/ou des indulines, ainsi que
b) au moins un sel métallique mono-, di-, tri- et/ou tétravalent choisi dans le groupe constitué par des chlorures métalliques, des bromures métalliques et des pseudo-halogénures métalliques, ainsi que des mélanges ou des combinaisons de ces substances, ladite composition additive étant conforme à l'une des deux revendications précédentes, **caractérisée en ce que** ledit au moins un sel métallique mono-, di-, tri- ou tétravalent est choisi dans le groupe constitué par des sels de métaux alcalins ainsi que des sels de métaux alcalino-terreux, de préférence des halogénures ou des pseudo-halogénures de métaux alcalins ainsi que des halogénures ou des pseudo-halogénures de métaux alcalino-terreux, en particulier le chlorure de lithium, le bromure de lithium, le benzoate de lithium, le chlorure de magnésium, le chlorure de calcium et/ou le chlorure de zinc.

11. Composition additive selon la revendication précédente, **caractérisée en ce que** le ratio en poids dudit au moins un colorant azinique sur ledit au moins un sel métallique mono-, di-, tri- et/ou tétravalent va de 1:99 à 99:1, de préférence de 10:90 à 90:10 et plus préférentiellement de 80:20 à 20:80, la composition additive étant dépourvue d'halogénures de métaux de transition, de préférence dépourvue en plus d'iodures métalliques et/ou de sels de métaux de transition en général.

12. Procédé de retardement de la cristallisation, de réduction de la vitesse de cristallisation et/ou d'abaissement de la température de cristallisation d'un polymère thermoplastique apte à cristalliser, dans lequel une composition additive selon l'une des deux revendications précédentes est ajoutée dans une matrice polymère contenant ou constituée d'au moins un polymère thermoplastique apte à cristalliser, la matrice polymère est mise en fusion puis refroidie, ou la composition additive selon l'une des deux revendications précédentes est incorporée dans une matrice polymère à l'état de fusion liquide contenant ou constituée d'au moins un polymère thermoplastique apte à cristalliser puis refroidie.

13. Procédé selon la revendication précédente, **caractérisé en ce que** la composition additive ou des composants individuels de la composition additive sont introduits sous la forme d'un mélange maître ou d'un concentré, le mélange maître comprenant de préférence une matrice faite d'au moins un polymère thermoplastique apte à cristalliser, dans laquelle la composition additive est présente, qui est identique à la matrice de la composition polymère

14. Utilisation d'une composition additive selon l'une des revendications 10 à 11 pour retarder la cristallisation et/ou pour abaisser le point de cristallisation de polymères thermoplastiques aptes à cristalliser.

15. Pièce façonnée qui peut être fabriquée à partir d'une composition polymère selon l'une des revendications 1 à 9, en particulier par moulage par injection, par extrusion, par des procédés de fabrication générative, par des procédés d'impression en 3D, par des procédés d'emboutissage profond et de moulage par soufflage.
